Europäisches Patentamt

**European Patent Office**

**Office européen des brevets**

(19)

(11) Numéro de publication: **0 129 469**

**A1**

(12)

# DEMANDE DE BREVET EUROPEEN

(21) Numéro de dépôt: **84401187.4**

(22) Date de dépôt: **08.06.84**

(51) Int. Cl.³: **A 01 K 91/00**

(30) Priorité: **15.06.83 ES 523293**

(43) Date de publication de la demande:
**27.12.84 Bulletin 84/52**

(84) Etats contractants désignés:
**DE FR GB IT**

(71) Demandeur: **Del Pozo Obeso, Rafael**
**General Mola 4-4o**
**Reinosa (Santander)(ES)**

(72) Inventeur: **Del Pozo Obeso, Rafael**
**General Mola 4-4o**
**Reinosa (Santander)(ES)**

(74) Mandataire: **Levy, David et al,**
**c/o S.A. Fedit-Loriot 38, avenue Hoche**
**F-75008 Paris(FR)**

(54) **Perfectionnements apportés aux bas de ligne de pêche.**

(57) Le bas de ligne comporte une âme de configuration conique et une enveloppe tubulaire consistant en un filet obtenu à à partir de filaments de diamètres micrométriques.

EP 0 129 469 A1

1

## Perfectionnements apportés aux bas de ligne de pêche.

La présente invention se réfère à un bas de ligne du type de ceux utilisés dans la pratique de la pêche "à la mouche", qui a été sensiblement perfectionné en vue d'en améliorer la fonction et l'efficacité.

Les amateurs de pêche à la truite au moyen d'une "mouche" savent que le lancer doit être nécessairement d'une extraordinaire précision en vue d'obtenir des résultats optimaux, dans la mesure où ce genre de pêche s'effectue pour la plupart à la surface, le pêcheur devant lancer la mouche au-dessus de la truite ou du groupe de truites au moment même où il les aperçoit. Il est tout aussi évident, par ailleurs, que les possibilités d'atteindre davantage de pièces augmentent en fonction de la distance que peut couvrir le pêcheur.

Ainsi donc, pour atteindre la plus grande efficacité, le lancer de la mouche doit être précis et très souvent long.

Comme on le sait également, une ligne de pêche à la ligne comprend trois parties ou secteurs fondamentaux : la ligne proprement dite, le bas de ligne et le bout du bas de ligne garnie de la mouche. Le bout du bas de ligne est un secteur court à un seul fil du plus petit diamètre possible, pour que les poissons ne puissent le voir, assurant une distance appropriée entre la mouche et le bas de ligne.

Le bas de ligne est l'élément qui, grâce à son moindre poids et à une plus grande flexibilité, reçoit l'élan imprimé par la ligne, et le transmet et le répartit à son tour au fil du bout de ligne et à la mouche, de façon contrôlée. Ainsi donc, l'élan passe de la canne à la ligne, puis de celle-ci au bas de ligne et finalement au bout du bas de ligne et à la mouche.

Il découle de ce qui précède que le bas de ligne constitue l'élément fondamental dans la mesure où la précision du lancer dépend de sa structure et de son efficacité.

Lors du lancer, il décrit en l'air une courbe divergente et croissante et, pour que le lancer soit efficace et précis, ce bas de ligne doit être dans le prolongement de la ligne et se comporter de façon semblable à un fouet. Pour cela, le bas de ligne doit avoir une épaisseur décroissante vers l'extrémité réceptrice du bout de ligne et il doit, en outre, être flexible et élastique.

Ces exigences en vue d'une fonction optimum d'un bas de ligne sont connues depuis longtemps et, à cet égard, les bas de ligne conventionnels sont formés d'une pluralité de secteurs de diamètre différent qui, dûment noués les uns aux autres, confèrent au bas de ligne un diamètre ou section qui va en décroissant de façon échelonnée. Cependant, les noeuds existant entre les différents secteurs ou tronçons constituent le problème fondamental dans la mesure où ils déterminent de multiples zones d'interruption des caractéristiques de l'ensemble dans la dynamique du lancer.

En vue d'éliminer ce problème des noeuds, il existe également des bas de ligne connus constitués par un seul filament, d'épaisseur décroissante mais, de par leur propre nature, ces bas de ligne s'avèrent très peu flexibles et tendent à former des boucles qui en entravent le maniement et font qu'ils soient considérablement moins opérationnels, de sorte que de tels bas de ligne, bien qu'acceptables du point de vue structurel -dans la mesure où ils assurent parfaitement la configuration conique appropriée- s'avèrent fort peu intéressants du point de vue fonctionnel, car il faut les chauffer avant de les utiliser pour éliminer leur tendance à la formation de boucles et, par ailleurs, leur rigidité réduit considérablement l'efficacité du lancer en transmettant moins bien, pour la même raison, l'énergie.

En vue de résoudre ce problème et de disposer d'un bas de ligne sans noeuds, le demandeur qui est titulaire du brevet d'invention japonais numéro 161.120/82 propose une solution qui consiste à partir d'un filament de section constante, de confectionner, sur un support approprié, des boucles allant en nombre décroissant des extrémités vers le centre et reliées les unes aux autres, qui déterminent un ensemble qui, une fois soumis à une torsion à l'une de ses extrémités, peut être plié par sa zone centrale ou médiane en obtenant ainsi un cordon sans noeuds, de configuration pratiquement conique. Bien que très supérieur du point de vue fonctionnel à ceux précités et présentant une grande élasticité qui permet d'absorber les secousses imprimées par le poisson sans risque pour le bout de ligne -problème que présentent également de façon notoire les bas de ligne conventionnels-, ce bas de ligne présente cependant une certaine tendance à l'auto-enroulement qui doit être éliminée.

Le bas de ligne proposé par la présente invention constitue dans ce domaine un progrès technologique notable en partant d'une conception structurelle totalement distincte grâce à laquelle le bas de ligne acquiert un degré de flexibilité, une élasticité appropriée et la configuration conique requise, le tout en assurant une certaine consistance du bout qui permet de transmettre l'effort du lancer non seulement sur toute sa longueur, mais aussi au bout du bas de ligne qui lui est associé.

A cet égard, le bas de ligne préconisé comprend une âme à base d'une pluralité de filaments, de différentes longueurs, reliés par l'une de leurs extrémités de telle sorte que cette âme adopte dans son ensemble une configuration sensiblement conique, âme destinée à recevoir un filet périmétrique à maille fine qui, en revêtant ladite âme conique en adopte la même configuration. Le filet est obtenu à partir de filaments de diamètre micrométrique.

De même, les filaments de l'âme sont de diamètre micrométrique, et dont un certain nombre sont éliminés au cours de la fabrication de ladite âme, mais de telle sorte que le secteur terminal des filaments éliminés reste logé à l'intérieur de l'extrémité conique pour éviter le démaillage.

Grâce à l'utilisation pour la conformation de l'âme intérieure de filaments d'une grande flexibilité, et grâce aux propres caractéristiques du filet l'enveloppant, l'on obtient un élément flexible et élastique, d'une grande résistance, capable de transmettre parfaitement sur toute sa longueur les efforts auxquels il est soumis, en assurant ainsi un niveau de précision maximum du lancer de la mouche.

Parallèlement à ces performances optimales en tant qu'élément de lancer, la structure du bas de ligne proposé par l'invention permet d'y établir deux zones fonctionnelles différentes. Concrètement et comme on le sait, il existe des cas où l'on désire que le bas de ligne flotte et d'autres où il est plus intéressant qu'il plonge ; dans le premier cas, il s'agit que la mouche conserve sensiblement la position superficielle de chute, alors que dans le second cas, il s'agit qu'elle s'enfonce -sans que l'enfoncement du bas de ligne provoque une déformation parabolique de la ligne- au-dessous de la surface de l'eau, ce qui détermine un long et progressif déplacement de la mouche jusqu'à ce que le bas de ligne se trouve entraîné par celle-ci au-dessous de l'eau.

Dans ce sens et en maintenant la structure et les caractéristiques du filet tubulaire du bas de ligne, dans le premier cas, les filaments constituant l'âme conique sont à base d'un matériau hydrofuge, l'ensemble étant utilisé graissé, ce qui lui confère une grande flottabilité, alors que dans le second cas, soit lorsque l'on désire que le bas de ligne s'enfonce, l'âme sera à base d'un matériau plus dense que l'eau -ouate, par exemple-, de sorte qu'après avoir pris contact avec la surface de l'eau, l'âme fasse fonction d'éponge en prenant progressivement du poids et en s'enfonçant progressivement en harmonie avec la ligne. Il est évident que, dans ce second cas, l'on peut utiliser au lieu d'un matériau hydrophile, un matériau d'une densité supérieure à celle de l'eau pour en assurer l'enfoncement.

Il découle de la propre structure du bas de ligne proposé par l'invention, indépendamment des caractéristiques fonctionnelles optimales qu'il présente, des avantages complémentaires, parmi lesquels il convient de souligner sa grande facilité de fixation aussi bien à la ligne qu'au bout de ligne.

A cet égard, le filet tubulaire enveloppant l'âme conique est susceptible d'être évasé, par exemple à l'extrémité réceptrice de la ligne et d'entourer l'extrémité correspondante de cette ligne après y avoir déposé une goutte d'adhésif, comme par exemple du cyanoacrylate, en disposant sur cette zone d'une toute petite bague en matière plastique ou autre, très flexible qui maintient les fils du bas de ligne parfaitement adaptés à la ligne pendant le court laps de temps nécessaire pour que sèche l'adhésif, en assurant ainsi que la surface de contact soit parfaitement lisse, de sorte que le raccordement ainsi réalisé glisse en toute facilité à travers les anneaux de la canne lorsqu'il doit y passer. Il est évident que ce système de fixation est infiniment plus commode et plus efficace que le système conventionnel à base de noeuds des bas de ligne connu jusqu'à présent.

Il est évident que la matérialisation d'un bas de ligne réalisé conformément aux perfectionnements préconisés ici peut être menée à bien en obtenant l'âme conique par différents procédés, en utilisant différents types de filets pour l'envelopper et en ayant recours également à différents types de métiers à tresser, sans que cela entrave l'essentiel de l'invention.

1

<u>REVENDICATIONS</u>

1. Perfectionnements apportés aux bas de ligne de pêche, caractérisés essentiellement en ce qu'ils consistent à réaliser un bas de ligne d'une âme de configuration conique et d'une enveloppe tubulaire consistant en un filet obtenu à partir de filaments de diamètres micrométriques.

2. Perfectionnements apportés aux bas de ligne de pêche selon la revendication 1, caractérisés en ce que l'âme est constituée par une pluralité de filaments de diamètres micrométriques de différentes longueurs reliés par l'une de leurs extrémités, de sorte que l'interruption progressive desdits filaments à leur autre extrémité, détermine à son tour la configuration conique de l'ensemble.

3. Perfectionnements apportés aux bas de ligne de pêche selon la revendication 1, caractérisés en ce que les filaments de diamètre micrométrique constituant le filet tubulaire enveloppant sont en matériau d'une grande résistance, élasticité et flexibilité, ce filet adoptant la configuration conique déterminée par l'âme intérieure et ayant un caractère indémaillable.

4. Perfectionnements apportés aux bas de ligne de pêche selon l'une des revendications 1 ou 2, caractérisés en ce que les filaments de diamètres micrométriques constituant l'âme intérieure sont de nature hydrofuge, lorsque l'on veut que le bas de ligne flotte, alors qu'ils sont de nature hydrophile -ou en un matériau de densité supérieure à celle de l'eau- lorsque l'on désire que le bas de ligne s'enfonce dans l'eau.

5. Perfectionnements apportés aux bas de ligne de pêche selon l'une des revendications précédentes, caractérisés en ce que l'évasement d'un court tronçon ou secteur de la maille tubulaire correspondant à l'une de ses extrémités, permet l'adaptation des filaments ainsi obtenus à la périphérie de l'extrémité de raccordement de la ligne après avoir préalablement imprégné cette extrémité avec un adhésif, tel que du cyanoacrylate, pour assurer la jonction solide et pratiquement instantanée des deux éléments en recourant éventuellement à la collaboration d'une minuscule bague qui appuie les filaments de la maille contre la ligne durant le court laps de temps de séchage de l'adhésif.

**0129469**

Numéro de la demande

**RAPPORT DE RECHERCHE EUROPEENNE**

Office européen
des brevets

EP   84 40 1187

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| X | DE-U-8 307 093  (CORMORAN SPORTARTIKELVERTRIEB VON KELLER UND WILLENBRUCH) <br> * Revendications 1-5; page 5, ligne 11 - page 6, ligne 4; page 6, ligne 25 - page 7, ligne 5; figure 1 * | 1,3 | A 01 K   91/00 |
| A |  | 5 | |
| | --- | | |
| A | US-A-3 334 436  (W.G. COLE) <br> * Revendications 1,5; colonne 2, ligne 35 - colonne 3, ligne 34; figure 1 * | 1,2,4 | |
| | --- | | |
| A | FR-A-  547 099  (G-J. BOURIANT) | | |
| | --- | | **DOMAINES TECHNIQUES RECHERCHES (Int. Cl. ³)** |
| A | FR-A-1 254 833  (FARBWERKE HOECHST) | | A 01 K   91/00 |
| | ----- | | |

Le présent rapport de recherche a été établi pour toutes les revendications

| Lieu de la recherche | Date d'achèvement de la recherche | Examinateur |
|---|---|---|
| BERLIN | 13-08-1984 | BERGZOLL M C |